# FASCICULE DE BREVET EUROPEEN

(11) **EP 1 352 219 B1**
(45) Date de publication et mention de la délivrance du brevet: **12.02.2014**
(21) Numéro de dépôt: 01993816.6
(22) Date de dépôt: 12.11.2001
(51) Int. Cl.: G01F 23/16

(54) **CANNE DE MESURE DE NIVEAU D'UN BAIN EN FUSION**
STOCK ZUM NIVEAUMESSEN IN EINER SCHMELZE
STICK FOR MEASURING THE LEVEL OF A MOLTEN METAL BATH

(30) Priorité: 13.11.2000 FR 0014541
(43) Date de publication de la demande: 15.10.2003
(73) Titulaire: COMPAGNIE GENERALE DES MATIERES NUCLEAIRES, 78140 Velizy Villacoublay (FR); Commissariat à l'Énergie Atomique et aux Énergies Alternatives, 75015 Paris (FR)
(72) Inventeur: LADIRAT, Christian, F-30126 SAINT LAURENT des arbres (FR); MAURIN, Jean-Louis, F-30200 BAGNOLS/CEZE (FR); BOULAND, Pascal, F-78180 MONTIGNY LE BRETONNEUX (FR); MEHLMAN, Guillaume, F-75014 PARIS (FR)
(74) Mandataire: Ahner, Philippe
(86) Numéro de dépôt international: PCT/FR2001/003520
(87) Numéro de publication internationale: WO 2002/039070

(56) Documents cités:
- EP-A- 0 580 004
- US-A- 5 669 956

## Description

L'invention est une canne de mesure du niveau de bain liquide en fusion.

De telles cannes sont utilisées pour évaluer la hauteur de bains de matériaux très chauds, difficilement accessibles à l'observation, dans des creusets. La mesure consiste à injecter un gaz à débit constant dans le bain liquide en lui faisant parcourir un conduit de la canne qui débouche à une extrémité libre inférieure dans le bain liquide, et à mesurer la pression qu'on doit appliquer au gaz pour lui imposer l'injection au débit voulu.

Une limite de ces cannes de mesure apparaît si la température du bain est importante, ce qui est le cas dans certaines applications de vitrification, car les matériaux métalliques usuels en lesquels la canne est construite perdent leur résistance à ces températures. De plus, certains bains liquides tels ceux qui contiennent des éléments comme les sulfates, les chlorures ou le molybdène deviennent très corrosifs. Le remplacement des cannes est alors fréquent.

Le document US-A-5 669 956 décrit une canne de mesure de niveau à bout fusible, comprenant une paroi poreuse. Quand le bout atteint le bain fondu, il est enlevé, l'extrémité de la canne s'ouvre et le gaz injecté dans la canne s'écoule subitement, et la chute de pression est détectée. Et le document EP-A-0 580 004 décrit une canne de mesure de niveau à embout massif pour résister à la corrosion du bain. Ce document (et le premier non plus) ne divulgue toutefois pas de canal de refroidissement pour la canne.

L'objet de cette invention est d'améliorer la structure de telles cannes de mesure de niveau en leur permettant de résister à des bains liquides qui soumettent les cannes de mesure usuelles à des conditions trop difficiles.

La solution retenue consiste à refroidir la canne par un circuit interne d'écoulement de liquide froid. Ce procédé est efficace pour échapper à la corrosion et à la perte de résistance, mais il faut se garder de provoquer une solidification du bain devant le débouché du conduit de gaz car son éjection de la canne deviendrait impossible. Or l'échange de chaleur entre le bain fondu et un réfrigérant beaucoup plus froid produit un refroidissement intense de celui-là près de la canne.

La structure améliorée de canne de mesure de niveau qui est proposée ici pour satisfaire à ces exigences comprend un conduit d'injection d'un gaz dans le bain liquide à une extrémité libre de la canne, et, de façon originale, une enveloppe latérale entourant un canal de liquide de refroidissement, et un embout à l'extrémité libre, plus épais que l'enveloppe latérale et massif. L'embout épais et massif réduit localement le transfert de chaleur et aide à maintenir le bain à une température plus élevée devant lui qu'autour de l'enveloppe latérale. Cette disposition permet de maintenir le bain à un état liquide, pas trop visqueux, autour de l'extrémité libre de l'embout et donc de maintenir l'injection de gaz pour la mesure de niveau au débit voulu.

Avantageusement, l'enveloppe est en métal, contient un manchon concentrique à elle et séparant un canal d'alimentation du liquide de refroidissement d'un canal d'évacuation du liquide de refroidissement, l'embout a une épaisseur adaptée, de 35 mm dans un exemple particulier, et plus généralement de quelques centimètres et le liquide de refroidissement a un débit réglé pour refroidir le bain liquide à une température légèrement supérieure à la solidification (par exemple 1000°C) devant l'embout.

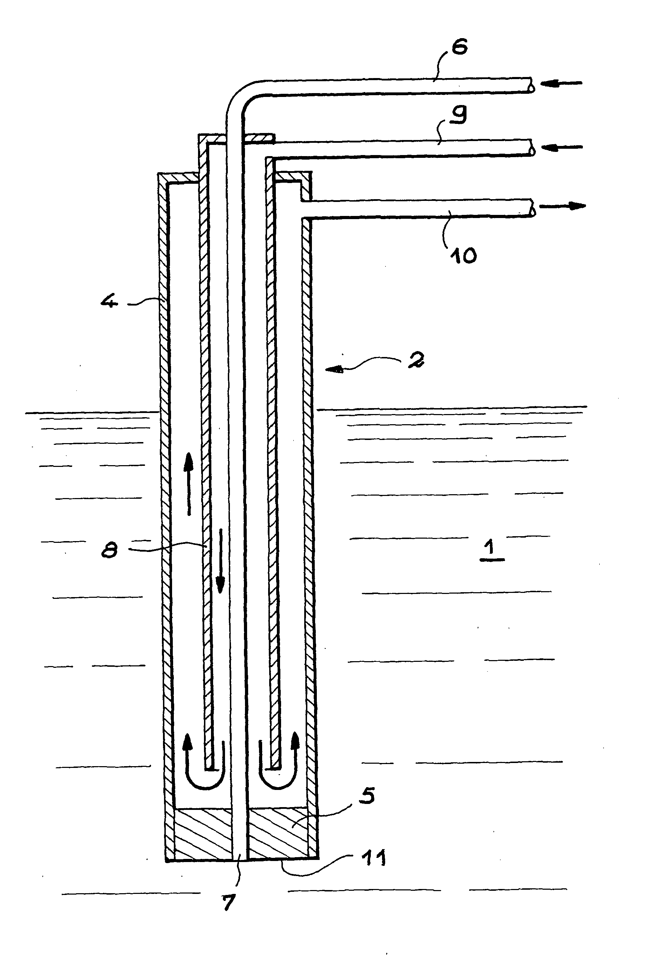

On va maintenant décrire l'invention plus en détail au moyen de la figure unique.

Le bain 1 en fusion dans lequel la canne 2 plonge peut être un produit à vitrifier, corrosif aux hautes températures. Les demandeurs ont développé une technique dite de creuset froid, où les produits à vitrifier ne sont pas chauffés par l'intermédiaire du creuset qui les contient mais par des phénomènes d'induction électromagnétiques, alors que le creuset est refroidi et qu'une couche solidifiée de la matière du bain, qui n'est pas corrosive, le recouvre. L'invention trouvera souvent emploi dans de tels creusets froids, sans être exclusive d'autres applications.

La canne 2 comprend une enveloppe extérieure 4 cylindrique, finissant sur un embout 5 à l'extrémité libre de la canne 2, un conduit d'injection de gaz 6 s'étendant dans l'axe de l'enveloppe 4, traversant l'embout et finissant en un orifice 7, et un manchon 8 intermédiaire à l'enveloppe 4 et au conduit 6 et parallèle à eux, qui finit à peu de distance de l'embout 5. L'embout 5 est engagé dans l'extrémité de l'enveloppe 4 (comme on l'a représenté) ou la prolonge. Des canalisations d'alimentation et d'évacuation de liquide de refroidissement 9 et 10 débouchent respectivement dans les sommets du manchon 8 et de l'enveloppe 4. Du liquide de refroidissement parcourt le manchon 8 vers l'embout 5, devant lequel il quitte le manchon 8 pour ébaucher une circulation à contre-courant entre lui et l'enveloppe 4 jusqu'au conduit 10.

L'enveloppe 4 est mince afin que la canne 2 ne soit pas trop lourde, mais l'embout 5 est massif et beaucoup plus épais, ayant une épaisseur (ou une hauteur) de 35 mm par exemple, mais qui est choisie pour obtenir à son extrémité une température du bain fondu suffisante pour permettre l'éjection du débit de gaz nécessaire à la mesure grâce à une fluidité suffisante du bain, mais assez basse pour garantir une bonne tenue mécanique et à la corrosion à l'extrémité de la canne 2.

Dans le cas d'un bain de 1200°C à 1300°C environ de matériau fondu et d'une canne construite en une matière métallique comme l'Inconel, la canne étant plongée d'une longueur d'un demi-mètre environ, on applique un débit d'eau à 20° permettant d'extraire une puissance calorifique de 5,3 kW ; un refroidissement à 600°C environ du bain est alors observé le long de l'enveloppe 4, ce qui solidifie les bains usuels. Toutefois, bien que le jet de refroidissement soit dirigé vers lui, l'embout 5 subit un refroidissement plus modéré en raison de son épaisseur : la température est de l'ordre de 1000°C sur sa face inférieure ou libre 11, de sorte que le bain 1 y reste liquide et ne risque pas de boucher l'orifice 7. La corrosion à ces températures par le bain 1 est modérée. Un refroidissement un peu plus important de l'embout 5 est possible pourvu que le bain 1 reste liquide devant lui.

## Revendications

1. Canne (2) de mesure de niveau d'un bain liquide (1) en fusion, comprenant un conduit d'injection d'un gaz dans le bain liquide à une extrémité libre (11) de la canne, pour mesurer la pression qu'on doit appliquer au gaz pour lui imposer l'injection à un débit voulu, **caractérisée en ce que** qu'elle comprend une enveloppe latérale entourant le conduit et séparée de lui par un canal de liquide de refroidissement, et un embout à l'extrémité libre, sur lequel finit l'enveloppe latérale, l'embout étant ouvert à l'endroit du conduit et massif, ayant une épaisseur plus grande que celle de l'enveloppe et choisie pour permettre l'injection du gaz en maintenant une fluidité suffisante du bain devant l'embout, alors que le bain est susceptible de se solidifier autour de l'enveloppe.

2. Canne de mesure selon la revendication 1, **caractérisée en ce qu'**elle est en métal, contient un manchon. (8) concentrique à l'enveloppe latérale (4) et séparant un canal d'alimentation du liquide de refroidissement d'un canal d'évacuation du liquide de refroidissement.

## Patentansprüche

1. Stock (2) zum Niveaumessen eines flüssigen Schmelzbades (1), umfassend eine Leitung zum Einspritzen eines Gases in das Flüssigbad an einem freien Ende (11) des Stockes, um den Druck zu messen, der auf das Gas ausgeübt werden muss, um sein Einspritzen in einer gewünschten Menge zu gewährleisten, **dadurch gekennzeichnet, dass** er eine seitliche Hülle, die die Leitung umgibt und von ihr durch einen Kanal mit Kühlflüssigkeit getrennt ist, und einen Ansatz an dem freien Ende umfasst, auf dem die seitliche Hülle endet, wobei der Ansatz an der Stelle der Leitung offen und massiv mit einer größeren Dicke als jene der Hülle ist, die derart gewählt ist, dass sie das Einspritzen des Gases ermöglicht und eine ausreichende Fluidität des Bades vor dem Ansatz ermöglicht, während sich das Bad um die Hülle herum verfestigen kann.

2. Stock zum Messen nach Anspruch 1, **dadurch gekennzeichnet, dass** er aus Metall ist, eine konzentrische Muffe (8) an der seitlichen Hülle (4) enthält und einen Zuführkanal der Kühlflüssigkeit von einem Ableitungskanal der Kühlflüssigkeit trennt.

## Claims

1. Measurement rod (2) for measuring the level of a melting liquid bath (1), comprising a duct (6) for injection of gas in the liquid bath at a free end (11) of the rod for measuring the pressure that must be imparted to the gas for imposing the injection at a required flow rate, **characterised in that** it comprises a side casing (4) surrounding the duct and separed therefrom by a cooling liquid channel, and an end piece (5) at the free end at which the side casing ends, the end piece being open at the duct and solid, having a thickness greater than the envelope and chosen for enabling the gas injection by maintaining a sufficient fluidity of the bath before the end piece, while the bath is likely to solidify around the envelope.

2. Measurement rod according to claim 1, **characterised in that** it is made of metal, contains a sleeve (8) concentric with the side casing (4) and separating a cooling liquid supply channel from a cooling liquid evacuation channel.
